# EUROPÄISCHE PATENTSCHRIFT

(11) **EP 0 603 701 B1**
(45) Veröffentlichungstag und Bekanntmachung des Hinweises auf die Patenterteilung: **10.03.1999**
(21) Anmeldenummer: 93120067.9
(22) Anmeldetag: 13.12.1993
(51) Int. Cl.: B01J 2/20

(54) **Vorrichtung zum streifen- oder tropfenförmigen Ausbringen fliessfähiger Massen**
Apparatus for bringing fluidic masses in the form of strips or droplets
Appareil pour mettre sous forme de rubans ou de gouttelettes des masses fluides

(30) Priorität: 24.12.1992 DE 4244038
(43) Veröffentlichungstag der Anmeldung: 29.06.1994
(73) Patentinhaber: Santrade Ltd., CH-6002 Luzern (CH)
(72) Erfinder: Kleinhans, Mathias, D-71336 Hohenacker (DE); Werni, Ferdinand, D-71384 Weinstadt-Schnait (DE); Froeschke, Reinhard, D-71384 Weinstadt (DE)
(74) Vertreter: Wilhelm & Dauster Patentanwälte European Patent Attorneys

(56) Entgegenhaltungen:
- DE-A- 4 032 683
- DE-C- 4 119 021

## Beschreibung

Die Erfindung betrifft eine Vorrichtung zum streifen- oder tropfenförmigen Ausbringen fließfähiger Massen auf ein unterhalb vorbeigeführtes Kühlband, mit mindestens einer drehbaren Trommel, die auf ihrem Umfang mit Öffnungen versehen ist, die bei der Rotation zyklisch mit der auszubringenden Masse durchsetzt werden, sowie mit einer die Trommel in dem von dem Kühlband abgewandten Bereich überdeckenden Heizhaube.

Vorrichtungen dieser Art sind bekannt (DE 40 13 405 C1). Die Heizhaube dient dabei zur Temperierung des Umfanges der rotierenden Trommel, an dem Materialreste hängenbleiben können, die nicht vollständig vertropft sind und die an einer Verfestigung gehindert werden müssen, um dann von einem Einweiser wieder in die Öffnungen der rotierenden Trommel zurückgedrückt werden zu können. Um Wartungsarbeiten vornehmen zu können, sind die bekannten Heizhauben bei anderen auf dem Markt befindlichen Bauarten um (Sandvik Rotoformer, Prospekt Sandvik Rotoform-Verfahren, Druckvermerk PS-409 GER 5.89) eine parallel zu der Achse der rotierenden Trommel angeordnete Achse hochschwenkbar ausgebildet, wobei diese Achse auf der in der Bewegungsrichtung des Kühlbandes liegenden Seite der Granuliereinrichtung angeordnet ist. Durch das Hochschwenken der Heizhaube wird der Umfang der rotierenden Trommel zwar zugängig, dennoch kann die vor der Granuliereinrichtung liegende Halterung für die Schwenkachse der Heizhaube bei Wartungsarbeiten, wie zum Beispiel dem Abziehen der rotierenden Trommel von dem stillstehenden Innenzylinder, wie beim Rotorformer, die freie Zugänglichkeit verhindern. Dies macht dann eine relativ aufwendige Demontage der gesamten Heizhaube einschließlich ihrer Halterung erforderlich.

Der vorliegenden Erfindung liegt die Aufgabe zugrunde, diese Nachteile zu vermeiden und eine einfache Möglichkeit zu finden, die Heizhaube zu entfernen, ohne daß dazu ein größerer Aufwand getrieben werden muß.

Zur Lösung dieser Aufgabe wird bei einer Vorrichtung der eingangs genannten Art vorgesehen, daß die Heizhaube um eine senkrecht zu der Rotationsachse der Trommel stehende Achse radial von der Trommel wegschwenkbar und mindestens in dem Bereich, in dem die Trommel im Schwenkweg liegt, mit einem lösbaren oder hochklappbaren Teil versehen ist.

Durch diese Ausgestaltung reicht ein einfacher Klappvorgang für den hochklappbaren Teil und ein anschließender Schwenkvorgang aus, um die Heizhaube vollständig aus dem Bereich der rotierenden Trommel wegzubewegen und in einen Bereich zu schwenken, der seitlich neben dieser Trommel und auch noch neben dem Kühlband liegt, wie das bei einer Ausgestaltung nach dem Anspruch 2 der Fall ist.

Eine vorteilhafte Weiterbildung der Erfindung sieht vor, daß die Schwenkachse des Schwenkarmes auf der entgegen der Laufrichtung des der Trommel zugewandten Trums des Kühlbandes liegenden Seite einer durch die Achse der Trommel verlaufenden Vertikalebene liegt. Die Schwenkachse und die gesamte Betrageinrichtung für die Heizhaube liegen daher, anders als bei den bisher bekannten Bauarten, in der Bewegungsrichtung des Kühlbandes noch vor der Granuliereinrichtung. Nach Anspruch 4 ist es zweckmäßig, bei einer Granuliereinrichtung mit einer Trommel, deren Achse im Bereich einer Vertikalebene liegt, in der die Achse der Umlenkwalze für das Kühlband angeordnet ist, die Schwenkachse des Schwenkarmes auch auf der entgegen der Laufrichtung des Kühlbandobertrumes liegenden Seite der durch die Achse der Umlenktrommel verlaufenden Vertikalebene anzuordnen. Die Heizhaube kann dann in einen Bereich abgeschwenkt werden, der auch noch vor der Umlenktrommel für das Kühlband liegt. Eine Behinderung liegt dann nicht mehr vor.

Bei einer Granuliereinrichtung mit einem den Trommelmantel von nicht abgetropfter Masse freihaltenden Einweiser, der seinerseits an einer Schwenkhalterung angebracht ist, wie es z.B. aus der DE 41 19 021 C1 bekannt ist, ist es besonders zweckmäßig, den Schwenkarm der Heizhaube auch als Schwenkarm für den Einweiser vorzusehen. Es ist dann zweckmäßig, nach Anspruch 6 den Schwenkarm mit einer Drehstopfbüchse an einem in der Schwenkachse angeordneten hohlen Bolzen zu lagern, wobei diese Drehstopfbüchse auch zur Zuführung des Heizmediums zur Heizhaube oder zur Heizhaube und zum Einweiser dienen kann.

Nach Anspruch 7 schließlich ist es vorteilhaft, wenn der hochklappbare Teil der Heizhaube an einem mit dem Schwenkarm verbundenen Scharnier angebracht ist, das auch als Schwenkachse für den anderen Teil der Heizhaube ausgebildet ist. Es wird nämlich dann auch möglich, wie auch bei den bisherigen Bauarten, den oberen Teil der Heizhaube und gegebenenfalls auch deren damit verbundene Seitenwände, nur nach oben wegzuklappen, um freie Sicht auf die rotierende Trommel zu erhalten und um gegebenenfalls kleinere Korrekturarbeiten vornehmen zu können.

Die Erfindung ist anhand von zwei Ausführungsbeispielen in der Zeichnung dargestellt und wird im folgenden erläutert. Es zeigen:
- Fig. 1: die schematische Schnittdarstellung durch einen sogenannten Rotoformer mit einem Einweiser und einer Heizhaube gemäß der Erfindung,
- Fig. 2: die Draufsicht auf die Einrichtung der Fig. 1 mit aus Gründen der Übersichtlichkeit abgenommenem Deckel der Heizhaube und
- Fig. 3: eine Darstellung ähnlich Fig. 1, jedoch bei einer anderen Ausführungsform.

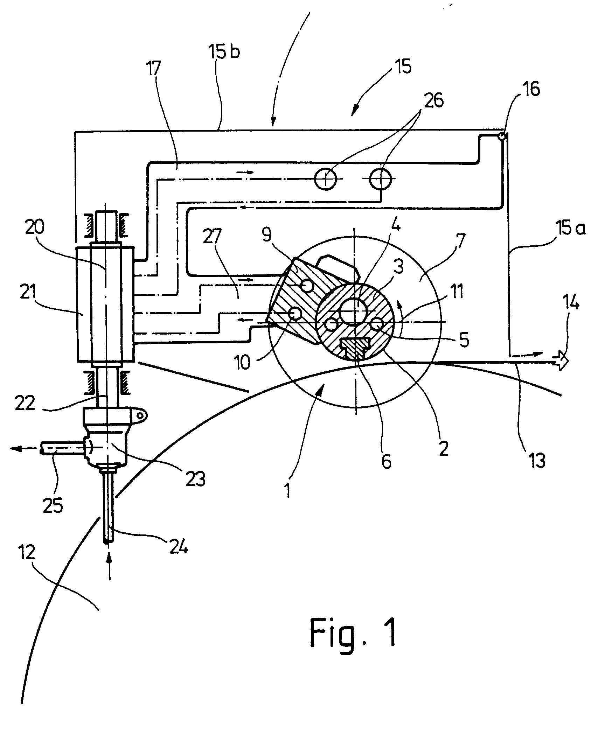

In der Fig. 1 ist ein sogenannter Rotoformer (1) gezeigt, wie er von der Firma Sandvik Process Systems, Fellbach, hergestellt und vertrieben wird. Dieser Rotoformer (1) besteht im wesentlichen aus einem rotierenden Rohr (2), das auf seinem gesamten Umfang mit Öffnungen versehen ist und auf einem inneren, zylindrischen Rohrkörper (3) drehbar aufgesetzt ist. Dieser innere Rohrkörper (3) weist einen in seiner Achsrichtung verlaufende Zuführkanal (4) für das zu verarbeitende Material auf, das in viskos-flüssiger Form in diesen Zuführkanal (4) von der Seite hereingebracht wird. Der innere Rohrkörper (3) besitzt außerdem Heizeinrichtungen (5) und eine axial eingeschobene Düsenleiste (6), die ausschließlich mit nach unten gerichteten Öffnungen in der Form eines Schlitzes versehen ist, die in nicht näher dargestellter Weise mit dem Zuführkanal (4) in Verbindung stehen. Dieser innere Rohrkörper (3) ist seitlich an einem Lager (7) angeordnet, das wiederum ortsfest an einem Haltearm (8) angebracht ist.

Am Mantel des rotierenden Außenrohres (2) liegt beim Ausführungsbeispiel ein Einweiser (9) an, der ebenfalls mit Heizeinrichtungen (10) axial durchsetzt ist. Dieser Einweiser (9) dient dazu, eventuell am Mantel des im Sinn des Pfeiles (11) rotierenden und mit einem nicht gezeigten Antrieb versehenen Rohres (2) noch anhaftendes Material wieder in die Öffnungen des Rohres (2) zurückzudrücken. In an sich bekannter Weise wird das durch den Zuführkanal (4) eintretende viskos-flüssige Material durch die Öffnungen der Düse (6) und durch die Öffnungen des Rohres (2) tropfenweise nach unten herausgedrückt, wenn die Öffnungen des Außenrohres (2) bei dessen Rotation zyklisch zur Deckung mit den Öffnungen in der Düsenleiste (6) kommen.

Unterhalb des Rotoformers (1) ist eine Umlenkwalze (12) für ein im Sinn des Pfeiles (14) bewegtes Kühlband (13) angeordnet, das im allgemeinen ein Stahlband ist. Die an der Unterseite des Rotoformers (1) austretenden Tropfen fallen auf das Kühlband (13) und erstarren dort bei dessen Weiterbewegung.

Der Rotoformer (1) wird von einer Heizhaube (15) abgedeckt, die aus seitlichen Wänden, einem aus einer etwa senkrecht auf dem Kühlband (13) stehenden Wand bestehenden hochklappbaren Teil (15a) und aus einem ebenfalls hochklappbaren Deckel (15b) besteht. Der Deckel (15b) und der hochklappbare Teil (15a) sind an einem Scharnier (16) gelagert, das parallel zur Rotationsachse des Rohres (2) verläuft und in der Bewegungsrichtung des oberen Trumes des Kühlbandes (13) hinter dem Rotoformer (1) liegt.

Diese Scharnierachse (16) und die daran befestigten Teile der Heizhaube (15) werden von Tragarmen (17 und 18) gehalten, die mit ihren vor dem Rotoformer (1) liegenden Enden an einem Schwenkarm (19) befestigt sind, der um eine senkrecht zu der Rotationsachse des Rohres (2) verlaufende Schwenkachse (20) bewegbar ist. Diese Schwenkachse (20) liegt beim Ausführungsbeispiel seitlich neben dem Kühlband (13) und auf der Seite des Rotoformers (1), die in der Bewegungsrichtung des Kühlbandes (13) vor diesem liegt.

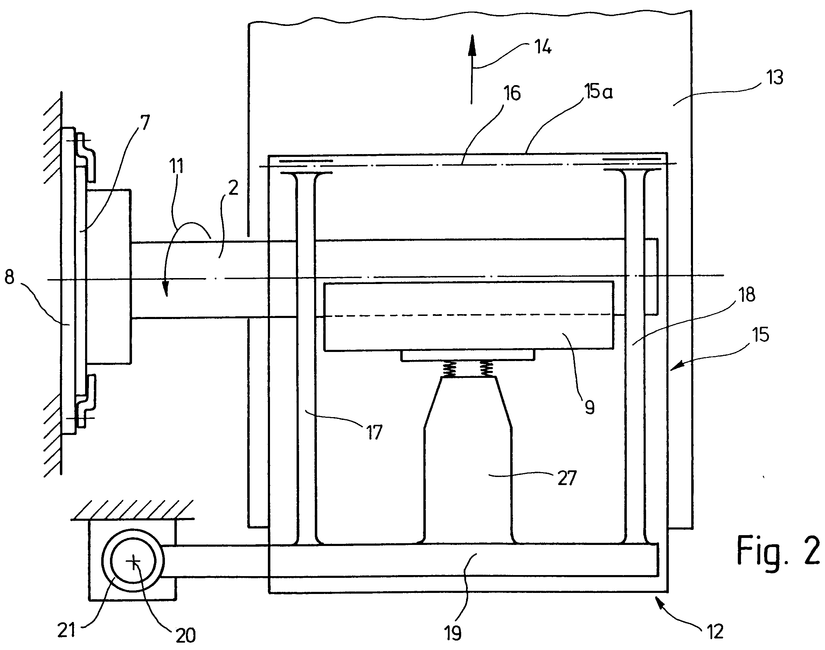

Der Schwenkarm (19) ist mit Hilfe einer Drehstopfbuchse (21), die nur schematisch dargestellt ist, an einem ortsfest gehaltenen, senkrecht stehenden Bolzen (22) gelagert, dessen Achse der Schwenkachse (20) entspricht. Der Bolzen (22) ist hohl ausgebildet und über eine Anschlußmuffe (23) durch eine Zuleitung (24) mit einem flüssigen Heizmittel versorgt, das aus der Abflußleitung (25) wieder abgeführt wird. Das zugeführte Heizmittel dient einmal zur Beheizung der Kanäle (10) des Einweisers (9), zum anderen aber auch zur Zufuhr von Heizmedium zu Heizschlangen (26), die innerhalb der Heizhaube (15) und im Bereich des Rotoformers (1) angeordnet sind. Die Verbindungsleitungen zu und von diesen Heizeinrichtungen (10 bzw. 26) zu der Drehstopfbuchse (21) sind schematisch strichpunktiert eingezeichnet. Sie verlaufen zweckmäßig innerhalb der Tragarme (17 und 18). Wie aus den Fig. 1 und 2 zu erkennen ist, ist außer diesen Tragarmen (17 und 18) für das Scharnier (16) auch noch ein fest mit dem Schwenkarm (19) verbundener Tragarm (27) vorgesehen, an dem der Einweiser (9) so angebracht ist, daß er elastisch gegen den Umfang des rotierenden Rohres (2) gedrückt werden kann.

Wie ohne weiteres aus den Figuren erkennbar wird, genügt es dann, wenn Wartungsarbeiten am Rotoformer (1) vorgenommen werden sollen, zunächst den Teil (15a) im Gegenuhrzeigersinn um das Scharnier (16) hochzuklappen und dann den Schwenkarm (19), der in seiner Stellung nach den Fig. 1 und 2 natürlich arretiert ist, zu entriegeln und dann im Uhrzeigersinn abzuschwenken. Dabei wird sowohl der Einweiser (9) als auch die Heizhaube (15) in radialer Richtung um die Achse (20) von dem Außenrohr (2) wegbewegt und kann bis in eine Stellung abgeschwenkt werden, die hinter der Umlenktrommel (12) und neben dem dieser zugeordneten Kühlband (13) liegt. Es ist dann ohne weiteres möglich, beispielsweise das rotierende Außenrohr (2) von seiner Lagerung auf dem Innenkörper (3) zu lösen und axial abzuziehen, um es gegen ein anderes Außenrohr auszuwechseln. Auch alle anderen Wartungsarbeiten können ohne Behinderung durchgeführt werden.

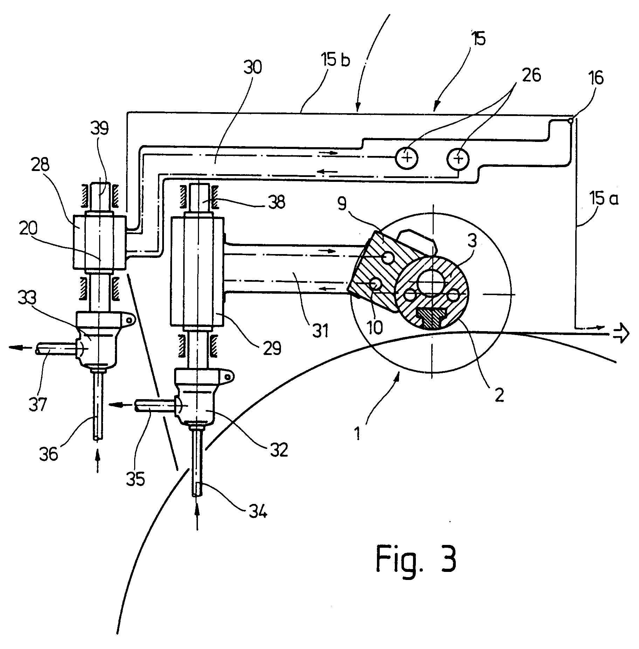

Die Fig. 3 zeigt eine Variante insofern, als hier die Heizhaube (15) und der Einweiser (9) nicht an einem gemeinsamen Schwenkarm (19), sondern an getrennten Schwenkarmen angeordnet sind, die jeweils mit den gezeigten Drehstopfbuchsen (28 und 29) verbunden sind. Die Heizhaube (15), die auch in diesem Fall mit dem hochschwenkbaren Teil (15a) und dem Deckel (15b) versehen ist, die um das Scharnier (16) schwenkbar sind, ist dabei über Tragarme (30) mit dem nicht gezeigten Schwenkarm verbunden, in denen die Zu- und Abführleitungen für das Heizmedium zu den Heizschlangen (26) verlegt sind. Der Einweiser (9) ist über Tragarme (31) mit seiner zugeordneten Drehstopfbuchse (29) bzw. dem daran befestigten und in der Fig.3 nicht gezeigten Schwenkarm verbunden. Auch die Tragarme (31) sind mit Zu- und Abführleitungen zu den Heizmitteln (10) im Einweiser (9) versehen. Der Rotoformer (1) entspricht im übrigen der Ausführungsform nach Fig. 1.

Bei der Ausführungsform nach der Fig. 3 erfolgt die Zuführung des Heizmittels zu der hohlen Achse (38) über eine Zufuhrbuchse (32), der die Zuführleitung (34) und die Abführleitung (35) zugeordnet sind. Von dem hohlen Bolzen (39), der auch die Schwenkachse für den Schwenkarm des Einweisers (9) bildet, gehen die Zuführungen in bekannter Weise zur Drehstopfbuchse (29) und von dort aus zum Einweiser (9). Für die Heizschlangen (26) wird das Heizmittel über die Zuführleitung (36) zugeführt, die in die Anschlußbuchse (33) mündet. Von dort gelangt das Heizmittel über den hohlen Bolzen (39) in die Drehstopfbuchse (28) und von dort aus über die Leitungen in den Tragarm (30) der Heizschlange (26). Die Rückführung des Heizmediums erfolgt in umgekehrter Weise über die Anschlußbuchse (33) und von dort durch die Abflußleitung (37) zurück zu einer Sammeleinrichtung, von wo aus das Heizmittel, ebenso wie das Heizmittel, das dem Einweiser (9) zugeführt wird, im Kreislauf gefördert und vor der Zuführung wieder aufgeheizt wird.

## Patentansprüche

1. Vorrichtung zum streifen- oder tropfenförmigen Ausbringen fließfähiger Massen auf ein unterhalb vorbeigeführtes Kühlband (13), mit mindestens einer drehbaren Trommel (2), die auf ihrem Umfang mit Öffnungen versehen ist, die bei der Rotation zyklisch mit der auszubringenden Masse durchsetzt werden, sowie mit einer die Trommel (2) in dem von dem Kühlband abgewandten Bereich überdeckenden Heizhaube (15), dadurch gekennzeichnet, daß die Heizhaube (15) um eine senkrecht zu der Rotationsachse der Trommel (2) stehende Achse (20) radial von der Trommel wegschwenkbar und mindestens in dem Bereich, in dem die Trommel im Schwenkweg liegt, mit einem lösbaren oder hochklappbaren Teil (15a) versehen ist.

2. Vorrichtung nach Anspruch 1, dadurch gekennzeichnet, daß die Heizhaube (15) an einem Schwenkarm (19) angebracht ist, dessen Schwenkachse (20) seitlich neben dem Kühlband (13) liegt.

3. Vorrichtung nach den Ansprüchen 1 und 2, dadurch gekennzeichnet, daß die Schwenkachse (20) des Schwenkarmes (19) auf der entgegen der Laufrichtung (14) des der Trommel (2) zugewandten Trumes des Kühlbandes (13) liegenden Seite einer durch die Achse der Trommel (2) verlaufenden Vertikalebene liegt.

4. Vorrichtung nach Anspruch 3 mit einer Trommel, deren Achse im Bereich einer Vertikalebene liegt, in der die Achse der Umlenkwalze für das Kühlband (13) angeordnet ist, dadurch gekennzeichnet, daß die Schwenkachse (20) des Schwenkarmes (19) auch auf der entgegen der Laufrichtung (14) des Kühlbandobertrumes liegenden Seite der durch die Achse der Umlenktrommel (12) verlaufenden Vertikalebene liegt.

5. Vorrichtung nach einem der Ansprüche 1 bis 4, mit einem den Trommelmantel von nicht abgetropfter Masse freihaltenden Einweiser (9), der an einer Schwenkhalterung angebracht und radial von der Trommel (2) abschwenkbar ist, dadurch gekennzeichnet, daß der Schwenkarm (19) der Heizhaube (15) auch als Schwenkarm für den Einweiser (9) dient.

6. Vorrichtung nach Anspruch 2 oder 5, dadurch gekennzeichnet, daß der Schwenkarm (19) mit einer Drehstopfbuchse (21) an einem in der Schwenkachse angeordneten hohlen Bolzen (22) gelagert ist, und daß die Drehstopfbuchse (21) auch zur Zuführung des Heizmediums zur Heizhaube (15) oder zur Heizhaube (15) und zum Einweiser (9) dient.

7. Vorrichtung nach Anspruch 1, dadurch gekennzeichnet, daß der hochklappbare Teil (15a) der Heizhaube (15) an einem mit dem Schwenkarm (19) verbundenen Scharnier (16) angebracht ist, das auch als Schwenkachse für den anderen Teil (15b) der Heizhaube ausgebildet ist.

## Claims

1. A device for yielding free-flowing masses in strip or droplet form onto a cooling conveyor (13) passing beneath with at least one rotatable drum (2) which has openings provided around its circumference through which the mass to be yielded passes cyclically during rotation, and with a heating cover (15) which covers the part of the drum (2) facing away from the cooling conveyor, characterised in that the heating cover (15) can be pivoted radially away from the drum (2) about an axis (20) which is vertical to the axis of rotation of the drum, and is provided with a detachable or upward folding part (15a) at least in the area in which the drum lies on the path of pivoting.

2. A device in accordance with Claim 1, characterised in that the heating cover (15) is fitted to a pivoting arm (19) with an axis of pivoting (20) which lies to the side of the cooling conveyor (13).

3. A device in accordance with Claims 1 and 2, characterised in that the pivoting axis (20) of the pivoting arm (19) lies to the side of a vertical plane running through the axis of the drum (2) counter to the direction of movement (14) of the belt section of the cooling conveyor (13) facing the drum (2).

4. A device in accordance with Claim 3 with a drum whose axis lies in the area of a vertical plane in which the axis of the diverting roll for the cooling conveyor (13) is positioned, characterised in that the pivoting axis (20) of the pivoting arm (19) also lies on the side of a vertical plane running through the axis of the diverting drum (12) which is counter to the direction of movement (14) of the upper cooling conveyor belt section.

5. A device in accordance with one of Claims 1 to 4 with a pointer (9) which keeps the drum casing clear of mass which has not dropped off and which is fitted to a pivoting retainer and can be pivoted radially away from the drum (2), characterised in that the pivoting arm (19) of the heating cover (15) also serves as the pivoting arm for the pointer (9).

6. A device in accordance with Claim 2 or 5, characterised in that the pivoting arm (19) is fixed with a rotating stuffing box (21) to a hollow bolt (22) positioned in the axis of pivoting and that the rotating stuffing box (21) also serves to feed the heating medium to the heating cover (15) or to the heating cover (15) and the pointer (9).

7. A device in accordance with Claim 1, characterised in that the upward folding part (15a) of the heating cover (15) is fitted to a hinge (16) which is connected to the pivoting arm (19) which is also designed as a pivoting axis for the other part (15b) of the heating cover.

## Revendications

1. Dispositif pour évacuer sous forme de bandes ou de gouttelettes des masses coulantes sur une bande réfrigérante (13) guidée et passant au-dessous, avec au moins un tambour (2) rotatif, qui est pourvu à sa périphérie d'ouvertures qui sont traversées lors de la rotation de façon cyclique avec la masse à évacuer, et avec un capot chauffant (15) recouvrant le tambour (2) dans la zone opposée à la bande réfrigérante, caractérisé en ce que le capot chauffant (15) peut pivoter autour d'un axe (20) perpendiculaire à l'axe de rotation du tambour (2) sur un plan radial en s'éloignant du tambour et au moins dans la zone dans laquelle le tambour se trouve sur le trajet effectué lors de la rotation et est pourvu d'une partie (15a) amovible ou relevable.

2. Dispositif selon la revendication 1, caractérisé en ce que le capot chauffant (15) est disposé sur un bras basculant (19), dont l'axe de pivotement (20) est situé latéralement à côté de la bande réfrigérante (13).

3. Dispositif selon les revendications 1 et 2, caractérisé en ce que l'axe de pivotement (20) du bras pivotant (19) est situé du côté opposé au sens de marche du brin de la bande réfrigérante (13) tourné vers le tambour (2) d'un plan vertical passant par l'axe du tambour (2).

4. Dispositif selon la revendication 1 avec un tambour, dont l'axe est situé dans la zone d'un plan vertical, dans lequel est disposé l'axe du cylindre de renvoi pour la bande réfrigérante (13), caractérisé en ce que l'axe de pivotement (20) du bras pivotant (19) est situé également sur le côté, contraire au sens de marche (14) du brin supérieur de la bande réfrigérante, du plan vertical passant par l'axe du tambour de renvoi (12).

5. Dispositif selon l'une quelconque des revendications 1 à 4, avec un guide (9) libérant le manteau du tambour de la masse non égouttée, qui est disposé sur une fixation pivotante et peut être basculé à partir du tambour (2) sur un plan radial, caractérisé en ce que le bras pivotant (19) du capot protecteur (15) sert également de bras pivotant pour le guide (9).

6. Dispositif selon la revendication 2 ou 5, caractérisé en ce que le bras pivotant (19) est logé avec un presse-étoupe (21) sur un boulon (22) creux et disposé dans l'axe de pivotement, et en ce que le presse-étoupe (21) sert également pour l'arrivée de l'agent de chauffage au capot chauffant (15) ou pour le capot chauffant (15) et pour le guide (9).

7. Dispositif selon la revendication 1, caractérisé en ce que la partie (15a) relevable du capot chauffant (15) est disposée sur une charnière (16) reliée au bras pivotant (19), qui est conçue également comme axe de pivotement pour l'autre partie (15b) du capot chauffant.
